# EUROPÄISCHE PATENTSCHRIFT

(11) **EP 1 914 122 B1**
(45) Veröffentlichungstag und Bekanntmachung des Hinweises auf die Patenterteilung: **15.12.2010**
(21) Anmeldenummer: 07115948.7
(22) Anmeldetag: 07.09.2007
(51) Int. Cl.: B60R 21/01

(54) **Verfahren und Vorrichtung zur Ansteuerung von Personenschutzmitteln**
Device and method for controlling personal security devices
Dispositif et procédé destinés à la commande de moyens de protection des personnes

(30) Priorität: 19.10.2006 DE 102006049262
(43) Veröffentlichungstag der Anmeldung: 23.04.2008
(73) Patentinhaber: ROBERT BOSCH GMBH, 70442 Stuttgart (DE)
(72) Erfinder: Kolatschek, Josef, 71263, Weil Der Stadt (DE); Breuninger, Joerg, 71282, Hemmingen (DE)

(56) Entgegenhaltungen:
- DE-A1- 10 317 703
- DE-A1- 19 824 353
- US-A1- 2001 032 075
- US-A1- 2005 096 817
- G.B. SINGH AND H. SONG: "Intelligent Algorithms for Early Detection of Automotive Crashes" SAE TECHNICAL PAPER SERIES, Nr. 2002-01-0190, 4. März 2002 (2002-03-04), XP002531863
- "Crash Detection System Using Hidden Markov Models" SAE TECHNICAL PAPER SERIES, Nr. 2004-01-1781, 8. März 2002 (2002-03-08), XP002531864

## Beschreibung

### Stand der Technik

Die Erfindung betrifft ein Verfahren und eine Vorrichtung zur Ansteuerung von Personenschutzmitteln nach der Gattung der unabhängigen Patentansprüche.

Aus G .B. Singh, H. Song: Intelligent Algorithmus for early detection of automotive crashes, SAE Technical Paper, 2002-01-0190 ist es bekannt, zur Crasherkennung ein diskretes Hidden Markov Model zu verwenden, wobei als Beobachtungsgrößen ein mit einem 100 Hz Butterworth-Filter gefiltertes und ein integriertes Beschleunigungssignal als Eingangsgröße verwendet wird. Aus G. B. Singh, H. Song, C. C. Chou: Crash Detection System Using Hidden Markov Models, SAE Technical Paper, 2004-01-1781 und aus US 2005/009 68 17 A1 ist ein kontinuierliches Hidden Markov Model bekannt, das eine Gaussverteilung von Crashpulsen, also Beschleunigungswerten annimmt. In dem Hidden Markov Model werden die Wahrscheinlichkeiten durch einen Durchschnittsvektor und eine Covarianzmatrix bestimmt. Die Eingangsgröße wird als kontinuierlich und als Serie von Pulsen beschrieben. Die Eingangsgröße kann beispielsweise das Beschleunigungssignal sein.

### Offenbarung der Erfindung

Das erfindungsgemäße Verfahren bzw. die erfindungsgemäße Vorrichtung zur Ansteuerung von Personenschutzmitteln mit den Merkmalen der unabhängigen Patentansprüche haben demgegenüber den Vorteil, dass nunmehr eine Sequenz von Merkmalsvektoren anhand einer Wahrscheinlichkeitsbetrachtung, die vorzugsweise über ein Hidden Markov Model geschieht, durchgeführt wird. Die Verwendung eines Merkmalsvektors ermöglicht eine beliebige Dimensionalität, insbesondere über eine Zwei- bzw. Dreidimensionalität hinaus. Die Verwendung von Wahrscheinlichkeiten liefert neben der Entscheidung, ob angesteuert werden soll oder nicht, ein Maß für die Sicherheit der Entscheidung. Die Verwendung von Merkmalsvektoren ermöglicht insbesondere die Verwendung von verschiedenen Sensorsignalen auch verschiedener Sensoren, deren Messprinzip auf unterschiedlichen physikalischen Messprinzipien beruht. Dabei können beispielsweise Merkmale aus Signalen von Beschleunigungssensoren, Drucksensoren, Temperatursensoren, Umfeldsensoren, Körperschallsensoren und anderen bekannten Unfallsensoren verwendet werden. Durch die Verwendung eines Merkmalsvektors kann durch die Vielzahl von Merkmalen auch eine feinere Klassifizierung erfolgen.

Es ist erfindungskennzeichnend, dass zur Bildung der wenigstens zwei Merkmale wenigstens zwei Werte aus dem Signal diskretisiert werden. Diskretisiert heißt, dass das Signal sowohl zeitlich wie auch in anderen Merkmalscharakteristiken quantisiert wird. Dies kann beispielsweise anhand einer zeitlichen Blockbetrachtung durchgeführt werden. Dabei wird ein vorgegebener Zeitabschnitt betrachtet und durch verschiedene Methoden der Diskretisierung ist es möglich, die Merkmalswerte zu gewinnen. Eine vorteilhafte Methode der Diskretisierung ist die sogenannte Vektorquantisierung (vergleiche hierzu Linde, Buzo, Gray: "An Algorithm for Vector Quantizer Design", IEEE Transaction on Communications, Jan. 1980) oder eine Skalarquantisierung (Abbildung einer kontinuierlichen Größe auf ein diskretes Werteraster) oder eine Polynomregression (Annäherung einer Wertekurve durch ein Polynom mit festgelegten n Koeffizienten) oder die Verwendung einer statistischen Analyse. Bei der Verwendung von statistischen Analysen können Varianzen oder höhere Momente ausgewertet werden. Auch mehrdimensionale Merkmalsvektoren dienen zur Diskretisierung.

Insbesondere ist es möglich, neben einer Erkennung von Auslöse- und Nichtauslösefällen eine weit aus differenziertere Klassifikation der Crashereignisse vorzunehmen. Es sind mittlerweile Personenschutzmittel zum Schutze der Insassen vielfältiger geworden und sie erfordern eine wesentlich feinere Unterscheidung und Charakterisierung der Unfallsituation, als das im Stand der Technik bekannt ist. Vorzugsweise ist ein Auslöseereignis in mehrere Crashschwereklassen zu unterteilen, wobei jede einzelne eine bestimmte Reihenfolge, einen zeitlichen Abstand oder überhaupt eine Aktivierung von Schutzmitteln bedingt. Beispiele für solche Personenschutzmittel sind adaptive Frontairbags, Kniebags, Kopfbags usw. Ebenso ist es wichtig, weitere Merkmale des Unfalls zu erkennen: Beispielsweise kann es zur Ansteuerung eines Seitenairbags, vorzugsweise eines sogenannten Curtains, wichtig sein, einen Winkelcrash bestimmter Crashschwere von allen anderen Crashes zu unterscheiden. Auch im Rahmen der Gesetzgebung wird eine solche feine Unterscheidung gefordert. Beispielsweise die Unterscheidung eines Frontcrashes mit 26 km/h von solchen mit 32 km/h Relativgeschwindigkeit zwischen dem Fahrzeug und dem Aufprallobjekt. Das erfindungsgemäße Verfahren bzw. die erfindungsgemäße Vorrichtung ist in der Lage, solche speziellen Anforderungen zu erfüllen.

Die Vorrichtung weist erfindungsgemäß wenigstens eine Schnittstelle auf. Diese Schnittstelle kann hardware- oder softwaremäßig ausgebildet sein. Ist sie hardwaremäßig ausgebildet, dann handelt es sich beispielsweise um eine integrierte Schaltung, an die externe Sensoren, die sich außerhalb der Vorrichtung befinden, also des Steuergeräts, angeschlossen werden. Die Schnittstelle kann jedoch auch softwaremäßig ausgebildet sein und ist dann auf der Auswerteschaltung, vorzugsweise einem Mikrocontroller als Softwaremodul enthalten. Bei der Auswerteschaltung kann es sich daneben auch um andere Prozessoren handeln oder um einen ASIC oder um eine diskret aufgebaute Schaltung. Die Ansteuerschaltung kann eine Logik aufweisen, um die Ansteuerung der Personenschutzmittel freizugeben, d. h. wenn das Ansteuersignal von der Auswerteschaltung kommt, kann auch ein weiteres Signal hinzugenommen werden, beispielsweise von einer redundanten Auswertung der Sensorsignale, um die Ansteuerung freizugeben. Im Übrigen ist die Ansteuerschaltung auch als integrierte Schaltung vorgesehen oder als diskret aufgebaute Lösung. Die Ansteuerschaltung sorgt insbesondere für die Bestromung der Personenschutzmittel, so dass pyrotechnische Schutzmittel wie Airbags gezündet werden und reversible Schutzmittel aktiviert werden. Zu den reversiblen Schutzmitteln zählen beispielsweise reversibel ansteuerbare Gurtstraffer, Kopfstützen oder auch Überrollbügel. Auch eine anhebbare Fronthaube kann hier dazu zählen, obwohl auch diese pyrotechnisch ausgebildet sein kann.

Durch die in den abhängigen Ansprüche aufgeführten Maßnahmen und Weiterbildungen sind vorteilhafte Verbesserungen der in den unabhängigen Patentansprüchen angegeben Vorrichtung zur Ansteuerung von Personenschutzmitteln bzw. des in den unabhängigen Patentansprüchen angegebenen Verfahrens zur Ansteuerung von Personenschutzmitteln möglich.

Besonders vorteilhaft ist, dass die Klassifizierung mittels eines Viterbi-Algorithmus durchgeführt wird. Der Viterbi-Algorithmus ist beispielsweise aus der Decodierung von Faltungscodes bei der mobilen Kommunikation bekannt. Strukturell ist das Erkennen der Unfallsituation anhand der Klassifizierung diesen Problemen ähnlich, so dass der Viterbi-Algorithmus hierfür verwendet werden kann. Dieser Viterbi-Algorithmus ist als sehr effizient bekannt und beschleunigt daher das erfindungsgemäße Verfahren. Der Viterbi Algorithmus berechnet welche Abfolge von versteckten Zuständen eines bestimmten HMMs bei einer betrachteten Folge von Merkmalszuständen am wahrscheinlichsten ist. Aus dieser wahrscheinlichsten Abfolge lässt sich eine Wahrscheinlichkeit angeben, mit der dieses HMM die beobachtete Folge von Merkmalszuständen erzeugt hat. Die Klassifikation ergibt sich dann, durch einen Vergleich dieser Wahrscheinlichkeit für verschiedene HMMs. Mit der Auswahl eines bestimmten HMMs ist dann eine Klassifikation erfolgt

Vorteilhafter Weise wird ein Hidden Markov Model verwendet, welches eine Mehrzahl von Endzuständen aufweist. Dies ermöglicht die Implementierung einer differenzierten Zustandsabfolge im Modell und erlaubt es beispielsweise, Fehlerzustände von Sensoren zu erkennen, da es nicht nur einen einzigen Endzustand gibt, der dem zu klassifizierenden Crash entspricht, sondern mehrere Möglichkeiten, wie es unten in der Beschreibung ausgeführt wird. Daher weist ein Hidden Markov Model gemäß der Erfindung nicht ein reines Links-Rechts-Modell auf oder ein vollverbundenes Modell, sondern es nimmt eine Mischtopologie an. Hintergrund ist, dass ein zeitlicher Verlauf der Crashsituation durch die Zustände im Hidden Markov Modell beschrieben wird. Die Übergänge werden durch Wahrscheinlichkeiten definiert. Da aber nicht jede Sequenz notwendigerweise in einem Crash enden muss, weist ein Hidden Markov Modell gemäß der Erfindung mehrere Endzustände auf.

Ein Hidden Markov Modell gemäß der Erfindung weist nur solche Zustandsübergänge auf, die in einer zeitlichen Entwicklung eines Unfalls vorkommen können. D. h. lediglich theoretisch mögliche Übergänge werden weggelassen.

Die Klassifizierung kann zur Verbesserung der Sicherheit der erfindungsgemäßen Vorrichtung bzw. des erfindungsgemäßen Verfahrens zusätzlich anhand einem Schwellwertvergleich der Wahrscheinlichkeit erfolgen. D. h. zunächst wird die Klasse gesucht, mit der die untersuchte Sequenz am besten übereinstimmt. Dies wird anhand der Wahrscheinlichkeit bestimmt. Die Wahrscheinlichkeit wird dann zusätzlich einer Schwellwertentscheidung unterzogen. Nur wenn auch die Schwellwertentscheidung anzeigt, dass die Wahrscheinlichkeit hoch genug ist, dann erfolgt die Ausgabe eines Ansteuersignals und damit die Ansteuerung der Personenschutzmittel.

Es ist vor allem vorteilhaft, dass die Klassifizierung für den Crashtyp und die Crashschwere erfolgt. Damit ist dann eine gezielte Ansteuerung von den vorhandenen Personenschutzmitteln möglich. D. h. aber, dass sowohl für den Crashtyp, als auch für die Crashschwere jeweils die Sequenzen klassifiziert werden. Dabei können die Merkmalsvektoren für die Crashschwere und den Crashtyp unterschiedliche Merkmale aufweisen. Die Ergebnisse für die Klassifizierung werden dann fusioniert, um zu einer Auslöseentscheidung zu gelangen.

Ein Computerprogramm, das die Verfahrensschritte ausführt und zwar insbesondere auf der Auswerteschaltung oder insgesamt auf dem Steuergerät, ist beispielsweise in einer objektorientierten Computerhochsprache geschrieben. Aber auch andere Programmiersysteme oder Sprachen, die hier geeignet sind, können verwendet werden. Insbesondere ist es möglich, dass ein Computerprogrammprodukt mit Programmcode, der auf einem maschinenlesbaren Träger, wie einer Festplatte, einer CD, einer DVD oder anderen Speichermitteln abgespeichert ist, vorliegt.

Ausführungsbeispiele der Erfindung sind in der Zeichnung dargestellt und werden in der nachfolgenden Beschreibung näher erläutert.

### Es zeigen:

- Figur 1: ein Blockschaltbild der erfindungsgemäßen Vorrichtung,
- Figur 2: die Softwaremodule, die ein Mikrocontroller aufweist,
- Figur 3: ein Flussdiagramm des erfindungsgemäßen Verfahrens,
- Figur 4: ein weiteres Flussdiagramm,
- Figur 5: ein drittes Flussdiagramm,
- Figur 6: ein Zustandsdiagramm,
- Figur 7: ein viertes Flussdiagramm und
- Figur 8: ein fünftes Flussdiagramm.

Für die Entwicklung von Auslösealgorithmen für Personenschutzmittel wie Airbags, Gurtstraffer, Überrollbügel und Fußgängerschutzmittel ist es für deren Robustheit und Effektivität notwendig, den Einfluss von Expertenwissen zu minimieren. Insbesondere soll eine ausgefeilte Klassifikation des Unfallereignisses stattfinden. Dies wird erfindungsgemäß dadurch erreicht, dass eine Sequenz eines Merkmalsvektors anhand von Wahrscheinlichkeitsbetrachtungen klassifiziert wird, indem bestimmt wird, welcher Klasse die vorliegende Sequenz mit der höchsten Wahrscheinlichkeit entspricht. In Abhängigkeit von dieser Klassifizierung erfolgt dann die Ansteuerung der Personenschutzmittel. Insbesondere ist dafür ein sogenanntes Hidden Markov Modell geeignet.

Ein Hidden Markov Modell ist durch folgende statistische Größen spezifiziert:
- Zustandsübergangsmatrix Zij: Wahrscheinlichkeit, mit der vom Zustand i zum Zeitpunkt t in den Zustand j zum Zeitpunkt t+1 gewechselt wird
- Beobachtungswahrscheinlichkeitsverteilung Bj:
   Gibt die Wahrscheinlichkeit an, mit welcher die Merkmale vom Zustand j erzeugt werden
- Anfangswahrscheinlichkeitsverteilung Aj:
   Gibt an, mit welcher Wahrscheinlichkeit die Auswertung im Zustand j begonnen wird.

Die drei Größen ergeben zusammengefasst das Modell λ = {Z*ᵢⱼ*, *Bⱼ*, *Aⱼ*}. Zu jeder zu unterscheidenden Klasse k wird ein Modell λ*ₖ* auf Basis der Crashdaten entwickelt. Typischerweise verwendet man hier ein automatisches Datenorientiertes Lernverfahren, wie es für Hidden Markov Modelle beispielsweise in Rabiner: A Tutorial on Hidden Markov Models and Selected Applications in Speech Recognition, Proceedings of the IEEE, Vol 77; No. 2; Februar 1989 dokumentiert ist. Durch die Interpretierbarkeit des Modells ist aber auch eine manuelle Einstellung bzw. Feinjustierung durch einen Experten denkbar. Die Merkmale werden typischerweise aus den Zeitwerten mindestens eines Beschleunigungssensors, Drucksensors, Köperschallsensors oder eines beliebigen anderen Sensors gewonnen. Diese Zeitwerte oder daraus abgeleitete Größen werden nach dem Verfahren der Vektorquantisierung diskretisiert. Dies kann beispielsweise durch blockweise Abarbeitung der Eingangsdaten geschehen, wobei ein Block immer die Daten für ein vorgegebenes Zeitintervall beinhaltet.

Alternative Methoden der Diskretisierung, die hier verwendet werden können sind (vorzugsweise blockweise):
- Skalarquantisierung
- Polynomkoeffizienten aus einer Polynomregression der Signale,
- Statistische Analyse (1, 2, 3...nte Momente der Verteilung der Datenwerte)
- Zusammengesetzte mehrdimensionale Vektoren aus oben aufgeführten Merkmalen
- Zusammengesetzte mehrdimensionale Vektoren aus oben aufgeführten Merkmalen von verschiedenen Sensoren.

Durch gezielte Anwendung dieser Verfahren und Wahl einer optimalen Blocklänge kann eine deutliche Verbesserung der Klassifikationsleistung gegenüber der von Singh et al. vorgeschlagene Methode erreicht werden.

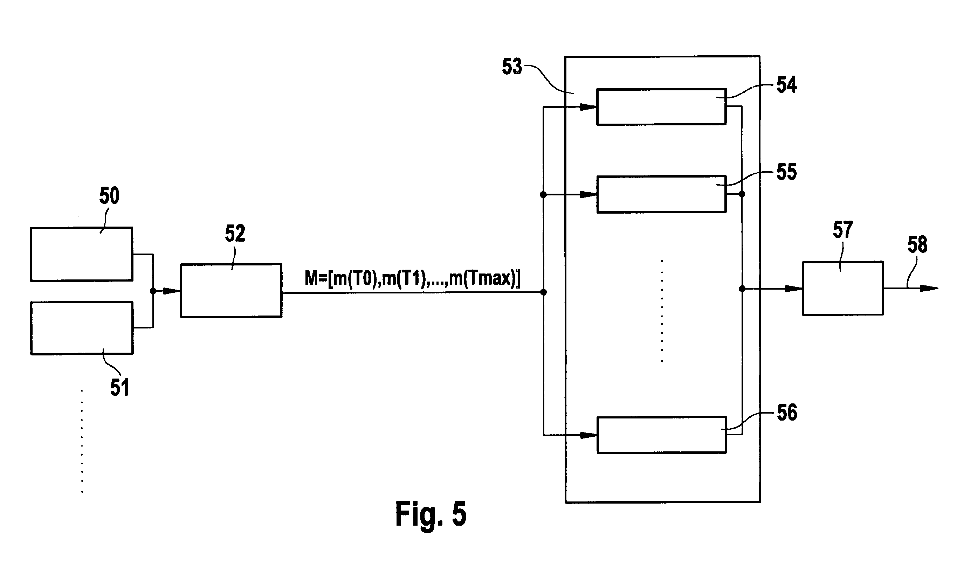

Es werden damit an fest definierten Zeitpunkten die Merkmale dem Hidden Markov Modell Klassifikator zur Auswertung zugeführt. Die maximale Zeittaktung (kürzeste Blocklänge) entspricht der des Sensors. Es entsteht somit eine Sequenz an beobachteten diskretisierten Merkmalsvektoren M =
{*m(T₀ ), m(T₁),.*..., *m*(*T*ₘₐₓ)}. Für jede Klasse k ermittelt der Hidden Markov Modell Klassifikator, mit welcher Wahrscheinlichkeit die gegebene Merkmalssequenz erzeugt worden sein kann. Alle Wahrscheinlichkeiten werden dann einer weiteren Einheit zugeführt, die eine in Abhängigkeit der Wahrscheinlichkeiten bezogene Entscheidung trifft. Im einfachsten Fall wird der beobachtete Crash der Klasse zugeordnet, die die höchste Wahrscheinlichkeit geliefert hat. Das grundsätzliche Auswerteschema ist in Fig. 5 skizziert.

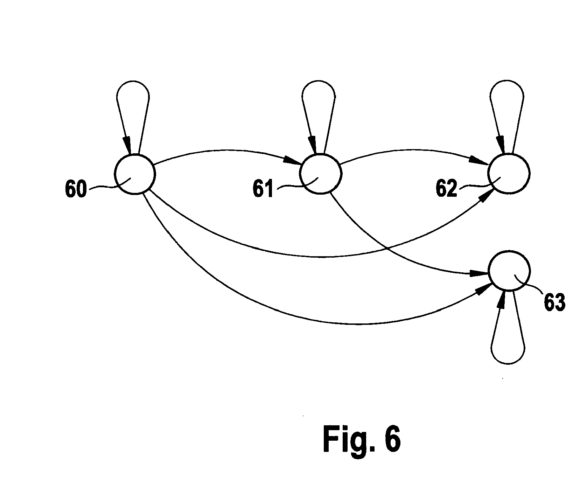

Eine für die Crashanwendung vorteilhafte spezielle Ausführung sieht vor, dass die Modellstruktur des Hidden Markov Modells so beschränkt wird, dass nur bestimmte Zustandsübergänge möglich sind. Dabei werden Zustandsübergänge nur zugelassen, wenn sie in einen Zustand gelangen, der einer späteren Phase des Crashs zugeordnet ist. Dies ist physikalisch sinnvoll, da es unmöglich ist, von einer späteren Crashphase in eine frühere zu wechseln. Auch ist es sinnvoll für die Anfangswahrscheinlichkeitsverteilung Aj vorzusehen, dass nur mit dem Zustand begonnen wird, der die früheste Crashphase repräsentiert. Ein solches Modell mit drei Zuständen zur Unterscheidung bestimmter Crashphasen ist als Zustandsgraph in Fig. 6 dargestellt. Zusätzlich und als besonderer Vorteil der Erfindung ist hier ein vierter Zustand eingeführt, der einen defekten Sensor wiedergeben soll.

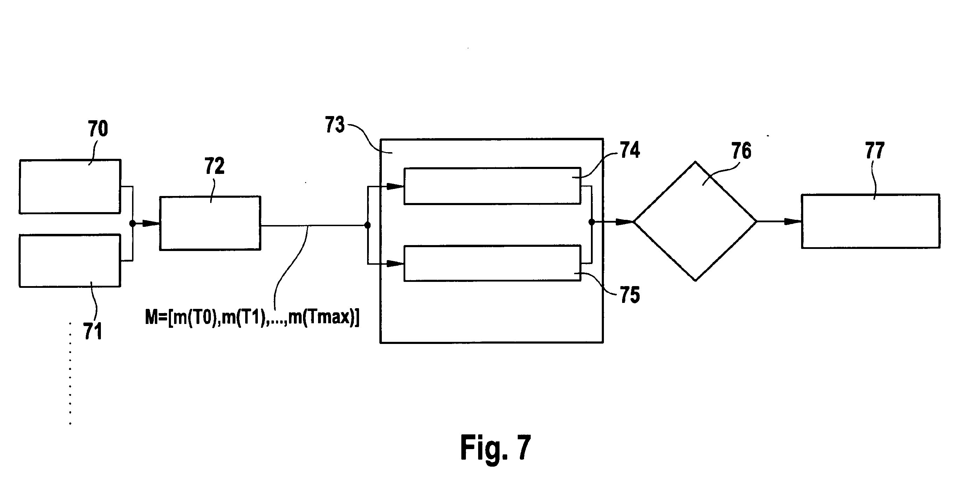

Die nachstehenden Bilder zeigen zwei weitere Realisierungsvarianten der Erfindung. In Fig. 7 wird lediglich zu jedem Zeittakt eine binäre Unterscheidung zwischen Fire und Non-Fire durchgeführt. Wenn am Ausgang des Klassifikators mehrmals hintereinander die über einen Zähler ermittelte Wahrscheinlichkeit für Fire höher ist als die der Non-Fire Klasse und gleichzeitig ein absoluter Schwellwert für die Wahrscheinlichkeit überschritten ist, so erfolgt eine Zündung der Rückhaltesysteme. Dies ist eine weitere Verbesserung der Methode gegenüber Singh et al., das ist die im Stand der Technik genannte Offenlegungsschrift, der hier nur eine Auswertung der Wahrscheinlichkeit bis zum erstmaligen Erkennen eines Crashes durchführt (Anspruch 14).

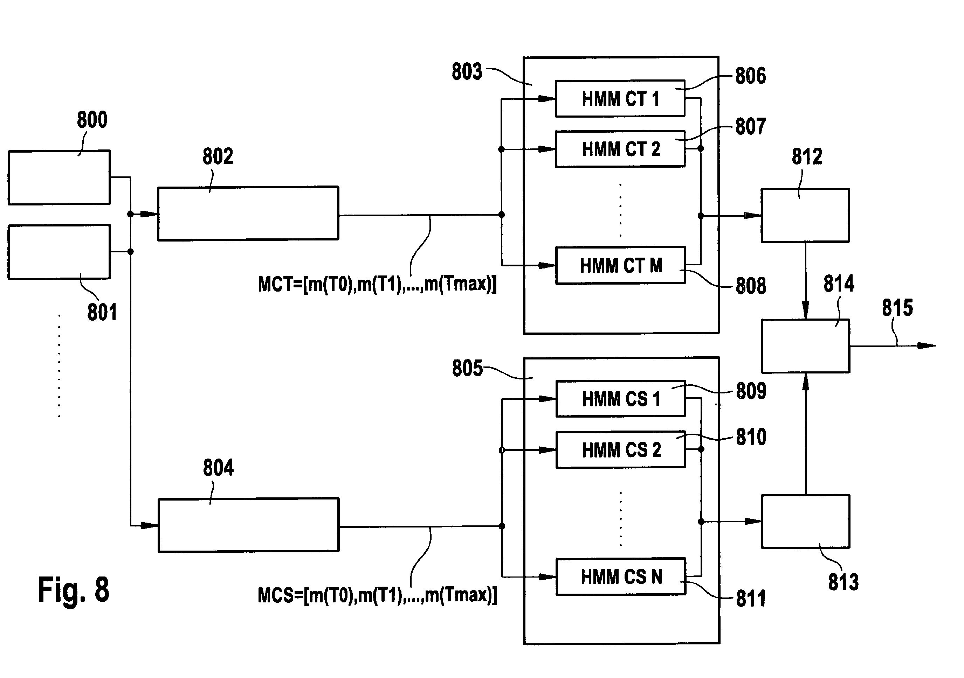

In Fig. 8 wird die Auslöseentscheidung über den Zwischenschritt einer Crashtyp-(CT-) und einer Crashschwere (CS-) erkennung herbeigeführt. Für jede (CT, CS) Kombination ist dabei das entsprechende Auslöseverhalten in einer Tabelle hinterlegt und kann nach Abgleich mit den Klassifikationsergebnissen aktiviert werden. Dies hat den Vorteil gegenüber der von Singh et al. verwendete Methode, dass es zum einen möglich ist, den Anforderungen heutiger Rückhaltemittel, wie in der Auflistung der Vorteile der Erfindung schon angesprochen wurde, gerecht zu werden, hat aber andererseits auch den Vorteil, dass es leicht möglich ist, bei Änderungen in der Ausstattung oder in den Anforderungen an die Zündung diese Ansteuerung zu ändern. Hier muss nicht das oder die Hidden Markov Modelle neu berechnet bzw. implementiert werden, sondern es ist ausreichend, die bisher verwendete Tabelle zur Ansteuerung der Rückhaltemittel durch eine neuere, aktualisierte Version zu ersetzen. Damit ist das System wesentlich ökonomischer und nutzerfreundlicher zu betreiben.

Eine gegenüber Fig. 8 geänderte Klasseneinteilung kann z. B. eine Einteilung nach Barrierenhärten und Aufprall-Relativ-Geschwindigkeiten beinhalten.

Eine weitere Ausformung des Verfahrens erlaubt es, die errechneten Wahrscheinlichkeiten bei der Ansteuerung der Zündmittel zu berücksichtigen. Die Hidden Markov Modelle liefern für jede Klassifizierung auch einen Wahrscheinlichkeitswert für die Richtigkeit dieser Entscheidung mit. Liegt der Wert dieser Wahrscheinlichkeit hoch (über einer vorgebbaren Schwelle) kann das entsprechende Rückhaltemittel sofort aktiviert werden. Liegt sie unterhalb dieser Schwelle, kann mit der Aktivierung des Rückhaltemittels noch abgewartet werden, bis die Wahrscheinlichkeit einen vorgegebenen Wert erreicht.

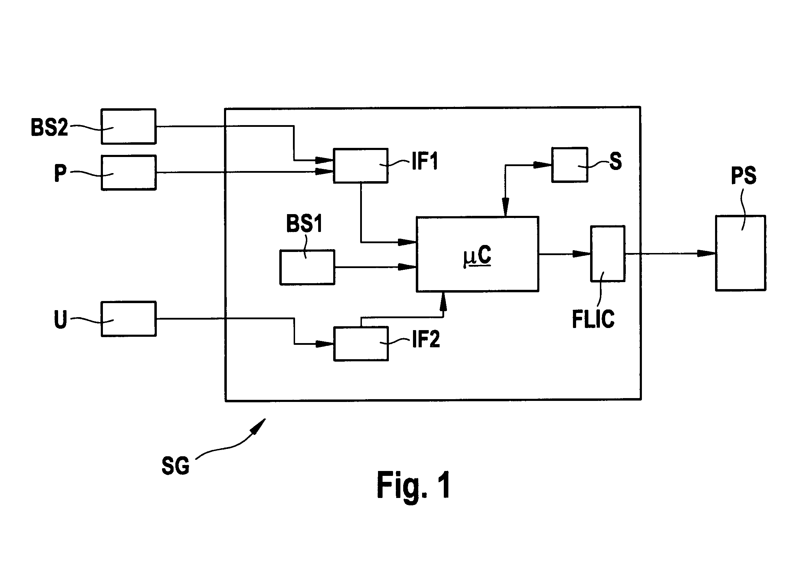

Figur 1 zeigt die erfindungsgemäße Vorrichtung als Steuergerät SG mit den verbundenen Komponenten. Das Steuergerät SG weist als zentrales Element einen Mikrocontroller µC als Auswerteschaltung auf. Anstatt eines Mikrocontrollers kann auch jede andere Prozessorvariante oder ein ASIC oder eine diskrete Schaltung als Auswerteschaltung verwendet werden. Dem Mikrocontroller µC ist ein Speicher S über einen Datenein-/ausgang zugeordnet, der sowohl flüchtige als auch nicht flüchtige Bereiche aufweist. Aus dem nicht flüchtigen Bereich lädt der Mikrocontroller µC die notwendigen Softwaremodule zur Bildung des Merkmalsvektors, zur Klassifizierung und zur Erzeugung des Ansteuerungssignals. Die flüchtigen Bereiche werden zur Ausführung der Softwaremodule benötigt.

Dem Mikrocontroller µC werden von zwei Schnittstellen IF1 und IF2 jeweils Daten von außerhalb des Steuergeräts SG befindlichen Sensoren bereitgestellt. Die Schnittstellen IF1 und IF2 sind vorliegend als integrierte Schaltkreise ausgebildet. Es ist möglich, dass die Schnittstellen alternativ diskret oder aus mehreren integrierten Schaltkreisen oder als Softwaremodul vorliegen. Die Schnittstellen IF1 und IF2 haben die Aufgabe, die ankommenden Daten der angeschlossenen Sensoren in ein für den Mikrocontroller µC geeignetes Format umzuformatieren. Kommunikation zwischen den Schnittstellen IF1 und IF2 wird vorzugsweise über den SPI- (Serial Peripherial Interface) Bus erreicht.

An die Schnittstelle IF1 ist die ausgelagerte Sensorik BS2 und die ausgelagerte Drucksensorik P angeschlossen. Die ausgelagerte Beschleunigungssensorik BS2 kann sowohl in der Fahrzeugseite als auch in der Fahrzeugfront als auch in der Fahrzeugmitte angeordnet sein. Dabei kann die Beschleunigungssensorik BS2 für die entsprechenden Aufprallarten in der entsprechenden Raumrichtung empfindlich sein. D. h. bei einer Anordnung in der Fahrzeugseite ist die Beschleunigungssensorik BS2 auch für einen Seitenaufprall empfindlich. D. h. die Empfindlichkeitsachse ist in Fahrzeugquerrichtung. Es ist jedoch möglich, dass selbst bei einer solchen Anordnung zusätzlich oder anstatt eine andere Empfindlichkeitsrichtung gewählt wird. Dies ermöglicht dann eine Plausibilisierung beispielsweise von einem Frontaufprall oder einem Schrägaufprall oder die eigene Plausibilisierung eines Seitenaufpralls durch die Signale in Fahrzeuglängsrichtung. Die Beschleunigungssensorik BS2 weist wenigstens ein mikromechanisches Element auf, das sich unter dem Einfluss einer Verzögerung bewegt, was zu einer Kapazitätsänderung führt. Diese Kapazitätsänderung wird als Spannungsänderung verstärkt und digitalisiert und so als Datentelegramm zur Schnittstelle IF1 übertragen. Für diese Aufgaben weist die Beschleunigungssensorik BS2 Schaltungsteile auf, die diese Funktionen ausführen können.

Die Drucksensorik P ist als Luftdrucksensorik ausgeführt. Dabei ist die Luftdrucksensorik P in den Seitenteilen des Fahrzeugs angeordnet, um einen Seitenaufprall schnell detektieren zu können, indem das komprimierte Luftvolumen bei einem Seitenaufprall im Seitenteil als schnelle Druckänderung erfasst wird. Auch dieser Luftdrucksensor ist üblicherweise mikromechanisch aufgebaut und weist analoge Schaltungsteile wie die Beschleunigungssensorik BS2 auf. Die Beschleunigungssensorik BS2 und die Luftdrucksensorik P sind vorliegend über Punkt-zu-Punkt-Verbindungen mit der Schnittstelle IF1 verbunden. Dabei erhalten diese ausgelagerten Sensoriken BS2 und P auch ihre Energie über diese Punkt-zu-Punkt-Verbindung und modulieren ihre Datentelegramme auf diese Energie, beispielsweise als Stromschwankungen, auf. Alternativ ist es möglich, dass eine solche Punkt-zu-Punkt-Verbindung als ein Quasi-Bus ausgebildet ist, der es erlaubt, mehrere Sensoren hintereinander zu schalten, um dann entweder durch eine zeit- oder situationsbedingte Schaltung die Übertragung der einzelnen Sensoren sukzessive zur Schnittstelle IF1 zu erlauben. Weiterhin ist es möglich, dass ein Sensorbus vorgesehen ist, der durch Fragen und Antworten die Übertragung der Daten von den Sensoren zur Schnittstelle IF1 erlaubt.

An die Schnittstelle IF2 ist eine Umfeldsensorik U angeschlossen. Diese Umfeldsensorik U überwacht das Umfeld des Fahrzeugs, indem beispielsweise Objekte bezüglich ihrer Relativgeschwindigkeit gegenüber dem Fahrzeug klassifiziert und eine mögliche Kollision vorhergesagt wird. Die Umfeldsensorik U weist beispielsweise eine Video-, Radar-, Ultraschall-, Lidar- oder andere geeignete Umfeldsensoriken zur Verfolgung von Objekten auf. Die Umfeldsensorik U ist dabei üblicherweise an der Fahrzeugperipherie angeordnet. Auch hier ist eine Punkt-zu-Punkt-Verbindung vorgesehen. Alternativ ist es auch hier möglich, Busverbindungen auszuführen. Hier kann der Anfangszustand des Hidden Markov Modells so gewählt werden, dass er dem Eindringen eines Objekts in einen vorgegebenen Schutzbereich um das Fahrzeug entspricht.

An den Mikrocontroller µC ist eine im Steuergerät SG befindliche Beschleunigungssensorik BS1 angeschlossen. Diese ist im Aufbau der Beschleunigungssensorik BS2 gleich oder ähnlich. Dabei kann es jedoch vorgesehen sein, dass die Beschleunigungssensorik BS1 Analogsignale an den Mikrocontroller µC überträgt, der selber Analogeingänge und damit interne Analog-Digital-Wandler aufweist. Die Beschleunigungssensorik BS1 kann dabei in Fahrzeuglängs- und - querrichtung empfindlich sein, wobei dafür auch beispielsweise eine winklige Anordnung, also eine Empfindlichkeitsachse zwischen der Fahrzeuglängs- und der Fahrzeugquerrichtung vorgesehen sein kann.

In Abhängigkeit von diesen Sensordaten bildet nun der Mikrocontroller µC Merkmalsvektoren und klassifiziert eine Sequenz dieser Merkmalsvektoren nach der Wahrscheinlichkeit, indem das oben beschriebene Hidden Markov Modell verwendet wird. Die Sequenz der Merkmalsvektoren beschreibt die Art des Unfalls, d. h. den Crashtyp und die Crashschwere oder ob es sich um einen Nichtauslösefall wie einen Parkrempler handelt. Besonders vorteilhaft ist dabei, dass der Merkmalsvektor ausgewertet wird. Dies erlaubt, alle Sensorwerte und davon abgeleitete Werte wie beispielsweise eine integrierte Beschleunigung in einem Vektor abzubilden. Damit kann die Gesamtheit dieser Sensorsignale als eine Sequenz klassifiziert werden. Anhand der Klassifizierung bestimmt dann der Mikrocontroller µC, ob ein Ansteuerungssignal an die Ansteuerschaltung FLIC zu übertragen ist, wobei dabei festgelegt wird, welche Personenschutzmittel anzusteuern sind. Das Ansteuerungssignal wird dabei ebenfalls über den SPI-Bus zur Ansteuerschaltung FLIC übertragen.

Die Ansteuerschaltung FLIC ist vorliegend wenigstens als ein integrierter Schaltkreis vorhanden, der neben den Leistungsschaltern die Zuführung des Zündstroms zu den Personenschutzmitteln ermöglicht, auch eine Ansteuerungslogik aufweist und beispielsweise Decodiermittel, um einen Softwarebefehl des Mikrocontrollers µC decodieren zu können.

Für den Betrieb des Steuergeräts SG sind weitere Komponenten im Steuergerät notwendig, die hier der Einfachheit halber nicht dargestellt sind, da sie zum Verständnis der Erfindung nicht notwendig sind.

Die Verbindung der Ansteuerschaltung FLIC zu den Personenschutzmitteln PS wie Airbags, Gurtstraffer, Überrollbügel, Fußgängerschutzmittel wird vorliegend über eine Punkt-zu-Punkt-Verbindung erreicht. Es ist alternativ möglich, dass das auch über einen Zündbus ermöglicht wird.

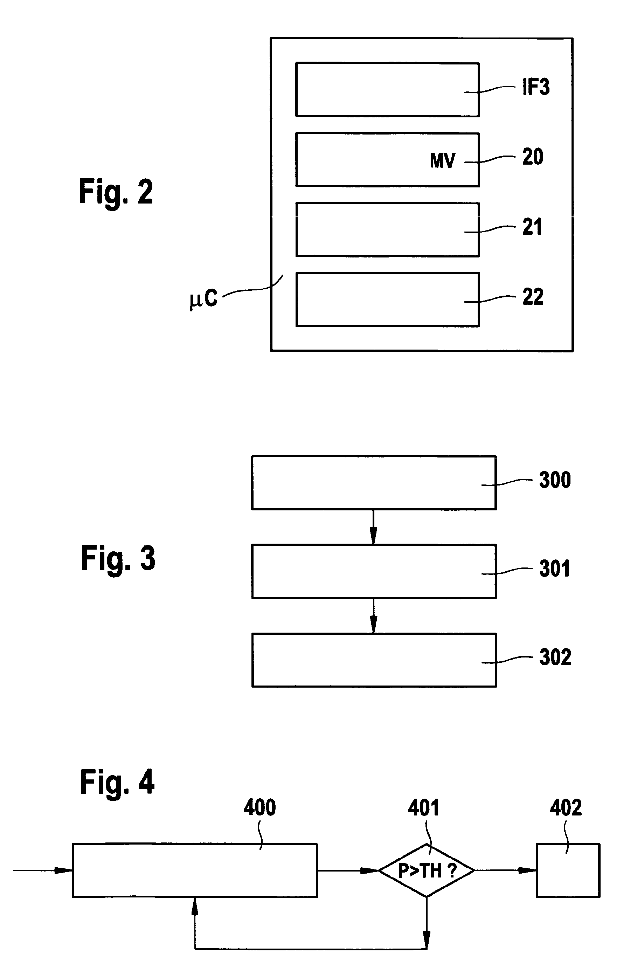

Figur 2 zeigt in einer schematischen Darstellung eine Auswahl der wichtigsten Softwaremodule, die auf dem Mikrocontroller µC ablaufen. Eine Schnittstelle IF3, die zur Bereitstellung der Sensorsignale der im Steuergerät SG befindlichen Beschleunigungssensorik BS1 dient, ist vorliegend vorgesehen. Ein Softwaremodul 20 dient zur Bildung der Merkmalsvektoren und damit zur Bildung der Sequenz der Merkmalsvektoren. Ein Modul 21 dient zur Klassifizierung dieser Sequenz und ein Modul 22 zur Bildung des Ansteuerungssignals, wenn die Klassifizierung dies anzeigt. Diese Module werden aus dem Speicher S geladen. Neben diesen Modulen gibt es noch weitere Module, die aber zum Verständnis der Erfindung nicht notwendig sind. Daher wurden auch diese der Einfachheit halber weggelassen. Die Softwaremodule sind in einer Computerhochsprache wie beispielsweise C++ geschrieben. Es ist möglich, auch jede andere Computerhochsprache dafür zu verwenden.

Figur 3 erläutert in einem Flussdiagramm das erfindungsgemäße Verfahren. In Verfahrensschritt 300 wird aus den Sensorsignalen und davon abgeleiteten Signalen ein Merkmalsvektor gebildet. Über der Zeit entsteht so eine Sequenz von Merkmalsvektoren, die in Verfahrensschritt 301 klassifiziert wird und zwar mittels des Hidden Markov Modells Dabei wird aus abgespeicherten Sequenzen die Sequenz ausgewählt, die mit der größten Wahrscheinlichkeit der gebildeten Merkmalsvektorsequenz entspricht. Diese Sequenz bestimmt dann die Klassifizierung. In Verfahrensschritt 302 erfolgt in Abhängigkeit von dieser Klassifizierung die Bildung des Ansteuersignals, das an die Ansteuerschaltung FLIC übertragen wird.

Figur 4 zeigt in einem weiteren Flussdiagramm die Klassifizierung der Sequenz der Merkmalsvektoren. In Verfahrensschritt 400 wird die Sequenz klassifiziert und zwar nach der Wahrscheinlichkeit, nach der die gemessene Sequenz der jeweiligen Klassifizierungssequenz entspricht. Liegt diese Wahrscheinlichkeit über einem vorgegebenen Schwellwert, was in Verfahrensschritt 401 geprüft wird, dann ist die Klassifizierung als korrekt anzunehmen, was in Verfahrensschritt 402 durchgeführt wird. Liegt jedoch die Wahrscheinlichkeit der Klassifizierung unterhalb des vorgegebenen Schwellwerts TH, dann wird zu Verfahrensschritt 400 zurückgesprungen und es wurde ein weiterer Merkmalsvektor zur Sequenz hinzugenommen, um damit die Klassifizierung qualitativ zu verbessern.

Mit dieser Methode ist es möglich, bereits mit wenigen Merkmalsvektoren, die eine Sequenz bilden, eine Klassifizierung frühzeitig durchzuführen. Dies führt zu einer Zeitersparnis und damit zu einer frühzeitigen Ansteuerung der Personenschutzmittel PS.

Figur 5 zeigt ein drittes Flussdiagramm. Die Signale der unterschiedlichen Sensoren 50 und 51 werden einer Merkmalsberechnung 52 zugeführt. Diese Merkmalsberechnung wird entsprechend der vorgenannten Verfahren durchgeführt. Über der Zeit entsteht dann eine Sequenz M, die aus den Merkmalsvektoren m (T₀), m (T₁) und m (Tₘₐₓ) besteht. Diese Sequenz wird mit der Klassifizierung 53 durchgeführt. Dabei wird die Sequenz mit verschiedenen Klassen 54, 55 und 56 verglichen. Die Klasse, die mit der größten Wahrscheinlichkeit der Sequenz entspricht, bestimmt die Klassifizierung. Im Block 57 wird dann anhand der Klassifizierung entschieden, ob ein Ansteuerungssignal erzeugt wird und welche Personenschutzmittel dabei angesteuert werden. Diese Entscheidung 58 wird dann als Ansteuersignal der Ansteuerschaltung FLIC übertragen.

Figur 6 zeigt ein Zustandsgraph für das Hidden Markov Modell, das geeignet ist für eine Crashmodellierung. Es sind hier drei Phasen 60, 61 und 62 dargestellt, die einen Crash charakterisieren. Phase 1 ist der Aufprall auf den Stoßdämpfer und daher mit 60 gekennzeichnet. Es kann sich hier um einen schwachen Aufprall handeln, so dass zu Phase 3, also 62, gesprungen werden kann. Handelt es sich um einen starken Aufprall, kann zu Phase 2 gesprungen werden, die mit 61 gekennzeichnet ist. Es ist jedoch auch möglich, und zwar mit einer gewissen Wahrscheinlichkeit, dass ein Sensor defekt ist. Dies ist durch den Zustand 63 gekennzeichnet. Anhand von Crashversuchen werden die Übergangswahrscheinlichkeiten festgestellt, um dann anhand der Sequenz des Merkmalsvektors festzustellen, welcher Klasse die Sequenz entspricht. Figur 6 zeigt dabei jedoch nur einen Ausschnitt eines Zustandsgraphen, der lediglich die Frühphase eines Crashes beschreibt. Um einen vollständigen Crash zu beschreiben, können bis zu den Endzuständen mehr Zustände erforderlich sein.

Figur 7 zeigt ein weiteres Flussdiagramm des erfindungsgemäßen Verfahrens. Von den Sensoren 70 und 71 stammen Sensorsignale, mit denen im Modul 72 der Merkmalsvektor M bestimmt wird. Der Merkmalsvektor M wird in den Klassifikator 73 eingegeben, der anhand der Klassen 74 und 75 bestimmt, ob ein Auslösefall vorliegt oder nicht. Im Block 76 wird dies geprüft, welches Ergebnis der Klassifikator 73 aufweist. In Abhängigkeit davon erfolgt dann im Block 77 die Zündung der Personenschutzmittel. Die Verwendung des Merkmalsvektors M ermöglicht hier eine genauere Bestimmung, ob ein Auslösefall vorliegt oder nicht. Insbesondere ist eine sehr feine Unterscheidung verschiedener Auslösefälle und Nichtauslösefälle möglich.

Figur 8 zeigt ein weiteres Flussdiagramm des erfindungsgemäßen Verfahrens. Nunmehr wird sowohl der Crashtyp als auch die Crashschwere bestimmt. Im oberen Zweig wird der Crashtyp bestimmt, im unteren Zweig die Crashschwere. Wiederum werden die Signale der Sensoren 800 und 801 beispielhaft betrachtet. Es können mehrere Signale betrachtet werden. Im Block 802 wird der Merkmalsvektor MCT für die Crashtypsbestimmung bestimmt. Im Block 804 wird der Merkmalsvektor MCS für die Crashschwerebestimmung gebildet. Der Merkmalsvektor MCT geht in den Klassifikator 803 ein. Dort erfolgt in der oben beschriebenen Weise die Klassifizierung anhand der Klassen 806, 807 bzw. 808. Eine weit höhere Anzahl von Klassen ist vorliegend möglich. Im Block 812 wird festgestellt, welche Klassifizierung vorliegt und dies dann dem Block 814 übergeben. Anhand des Merkmalsvektors MCS bestimmt der Klassifikator 805, welche Crashschwere vorliegt, und zwar anhand der Klassen 809, 810 bzw. 811 in der oben beschriebenen Weise. Der Block 813 stellt dies dann fest, welche Crashschwere vorliegt und meldet dies dem Block 814, der anhand des Crashtyps und der Crashschwere mittels einer Auslösetabelle bestimmt, welche Personenschutzmittel anzusteuern sind. Diese Entscheidung 815 wird dann an die Ansteuerschaltung FLIC übertragen.

## Patentansprüche

1. Verfahren zur Ansteuerung von Personenschutzmitteln (PS) mit folgenden Verfahrensschritten:
- Bildung wenigstens einer Sequenz von Merkmalsvektoren mit jeweils mindestens zwei Merkmalen aus wenigstens einem Signal einer Unfallsensorik (BS1, BS2, P, U), wobei zur Bildung der wenigstens zwei Merkmale wenigstens zwei Werte aus dem wenigstens einem Signal diskretisiert werden
- Klassifizierung der wenigstens einen Sequenz in Abhängigkeit von einer Wahrscheinlichkeit, mit welcher die wenigstens eine Sequenz zu einer Klasse gehört
- Ansteuerung der Personenschutzmittel in Abhängigkeit von der Klassifizierung

2. Verfahren nach Anspruch 1, **dadurch gekennzeichnet, dass** die Klassifizierung mittels eines Viterbi-Algorithmus durchgeführt wird.

3. Verfahren nach Anspruch 1 oder 2, **dadurch gekennzeichnet, dass** zur Klassifizierung ein Hidden Markov Modell verwendet wird, wobei das Hidden Markov Modell eine Mehrzahl von Endzuständen aufweist.

4. Verfahren nach Anspruch 1, **dadurch gekennzeichnet, dass** die Diskretisierung für jeweils einen zeitlichen Block des wenigstens einen Signals vorgenommen wird.

5. Verfahren nach Anspruch 1 oder 4, **dadurch gekennzeichnet, dass** die Diskretisierung mittels einer Vektorquantisierung oder einer Skalarquantisierung oder einer Polynomregression oder mittels einer statistischen Analyse durchgeführt wird.

6. Verfahren nach Anspruch 1 oder 4, **dadurch gekennzeichnet, dass** die wenigstens zwei Merkmale aus Signalen unterschiedlicher Unfallsensoren gebildet werden.

7. Verfahren nach einem der Ansprüche 3 bis 6, **dadurch gekennzeichnet, dass** das Hidden Markov Modell nur solche Zustandsübergänge zulässt, die einer zeitlichen Entwicklung eines Unfalls entsprechen.

8. Verfahren nach einem der vorherigen Ansprüche, **dadurch gekennzeichnet, dass** die Klassifizierung zusätzlich in Abhängigkeit von einem Schwellwertvergleich der Wahrscheinlichkeit erfolgt.

9. Verfahren nach einem der vorhergehenden Ansprüche, **dadurch gekennzeichnet, dass** eine Klassifizierung für einen Crashtyp und eine Crashschwere erfolgt.

10. Vorrichtung zur Ansteuerung von Personenschutzmitteln (PS) mit:
- wenigstens einer Schnittstelle (IF1, IF2, IF3), die wenigstens ein Signal einer Unfallsensorik (BS1, BS2, P, U) bereitstellt
- einer Auswerteschaltung (µC), die aus dem wenigstens einen Signal wenigstens eine Sequenz eines Merkmalsvektors mit jeweils mindestens zwei Merkmalen bildet, wobei zur Bildung der wenigstens zwei Merkmale wenigstens zwei Werte aus dem wenigstens einem Signal diskretisiert werden und die wenigstens eine Sequenz in Abhängigkeit von einer Wahrscheinlichkeit, mit welcher die wenigstens eine Sequenz zu einer Klasse gehört, klassifiziert, wobei die Auswerteschaltung in Abhängigkeit von der Klassifizierung ein Ansteuersignal erzeugt
- einer Ansteuerschaltung (FLIC), die in Abhängigkeit von dem Ansteuersignal die Personenschutzmittel (PS) ansteuert.

## Claims

1. Method for actuating personal protection means (PS), having the following method steps of:
- forming at least one sequence of feature vectors each having at least two features from at least one signal from an accident sensor system (BS1, BS2, P, U), at least two values being discretized from the at least one signal in order to form the at least two features,
- classifying the at least one sequence on the basis of a likelihood of the at least one sequence belonging to a class,
- actuating the personal protection means on the basis of the classification.

2. Method according to Claim 1, **characterized in that** the classification is carried out using a Viterbi algorithm.

3. Method according to Claim 1 or 2, **characterized in that** a hidden Markov model is used for classification, the hidden Markov model having a plurality of final states.

4. Method according to Claim 1, **characterized in that** the discretization is carried out for a respective temporal block of the at least one signal.

5. Method according to Claim 1 or 4, **characterized in that** the discretization is carried out by means of a vector quantization or a scalar quantization or a polynomial regression or by means of a statistical analysis.

6. Method according to Claim 1 or 4, **characterized in that** the at least two features are formed from signals from different accident sensors.

7. Method according to one of Claims 3 to 6, **characterized in that** the hidden Markov model allows only those state transitions which correspond to a temporal development of an accident.

8. Method according to one of the preceding claims, **characterized in that** the classification is additionally carried out on the basis of a threshold value comparison of the likelihood.

9. Method according to one of the preceding claims, **characterized in that** a classification is carried out for a type of crash and the severity of a crash.

10. Apparatus for actuating personal protection means (PS), having:
- at least one interface (IF1, IF2, IF3) which provides at least one signal from an accident sensor system (BS1, BS2, P, U),
- an evaluation circuit (µC) which uses the at least one signal to form at least one sequence of a feature vector having at least two features in each case, at least two values being discretized from the at least one signal in order to form the at least two features, and the at least one sequence being classified on the basis of a likelihood of the at least one sequence belonging to a class, the evaluation circuit generating an actuation signal on the basis of the classification,
- an actuation circuit (FLIC) which actuates the personal protection means (PS) on the basis of the actuation signal.

## Revendications

1. Procédé de commande de moyens de protection des personnes (PS) comprenant les étapes suivantes :
- formation d'au moins une séquence de vecteurs de caractéristique avec à chaque fois au moins deux caractéristiques à partir d'au moins un signal d'un dispositif de détection d'accident (BS1, BS2, P, U), au moins deux valeurs dudit au moins un signal étant rendues discrètes pour la formation desdites au moins deux caractéristiques,
- classification de ladite au moins une séquence en fonction d'une probabilité selon laquelle ladite au moins une séquence appartient à une classe,
- commande des moyens de protection des personnes en fonction de la classification.

2. Procédé selon la revendication 1, **caractérisé en ce que** la classification est effectuée au moyen d'un algorithme de Viterbi.

3. Procédé selon la revendication 1 ou 2, **caractérisé en ce qu'**un modèle de Markov caché est utilisé pour la classification, le modèle de Markov caché présentant une pluralité d'états finaux.

4. Procédé selon la revendication 1, **caractérisé en ce que** la discrétisation est effectuée à chaque fois pour un bloc temporel dudit au moins un signal.

5. Procédé selon la revendication 1 ou 4, **caractérisé en ce que** la discrétisation est effectuée au moyen d'une quantification vectorielle ou d'une quantification scalaire ou encore d'une régression polynomiale ou au moyen d'une analyse statistique.

6. Procédé selon la revendication 1 ou 4, **caractérisé en ce que** lesdites au moins deux caractéristiques sont formées à partir de signaux de différents capteurs d'accident.

7. Procédé selon l'une des revendications 3 à 6, **caractérisé en ce que** le modèle de Markov caché n'autorise que les transitions d'état qui correspondent à un développement dans le temps d'un accident.

8. Procédé selon l'une des revendications précédentes, **caractérisé en ce que** la classification s'effectue en plus en fonction d'une comparaison de valeurs de seuil de la probabilité.

9. Procédé selon l'une des revendications précédentes, **caractérisé en ce qu'**une classification est effectuée pour un type de collision et une gravité de collision.

10. Dispositif de commande de moyens de protection des personnes (PS) comprenant :
- au moins une interface (IF1, IF2, IF3) qui délivre au moins un signal d'un dispositif de détection d'accident (BS1, BS2, P, U),
- un circuit d'interprétation (µC) qui forme, à partir dudit au moins un signal, au moins une séquence d'un vecteur de caractéristique avec à chaque fois au moins deux caractéristiques, au moins deux valeurs dudit au moins un signal étant rendues discrètes pour la formation desdites au moins deux caractéristiques et ladite au moins une séquence est classifiée en fonction d'une probabilité selon laquelle ladite au moins une séquence appartient à une classe, le circuit d'interprétation générant un signal de commande en fonction de la classification,
- un circuit de commande (FLIC) qui commande les moyens de protection des personnes (PS) en fonction du signal de commande.
